# EUROPÄISCHE PATENTSCHRIFT

(11) **EP 1 433 593 B1**
(45) Veröffentlichungstag und Bekanntmachung des Hinweises auf die Patenterteilung: **16.08.2006**
(21) Anmeldenummer: 03028477.2
(22) Anmeldetag: 12.12.2003
(51) Int. Cl.: B32B 27/04, B32B 21/04

(54) **Flächiges Verbundmaterial**
Composite sheet material
Produit composite en feuilles

(30) Priorität: 13.12.2002 DE 10258431
(43) Veröffentlichungstag der Anmeldung: 30.06.2004
(73) Patentinhaber: National Starch & Chemical GmbH & CO. KG, 47533 Kleve (DE)
(72) Erfinder: Landenberger, Claus, 89518 Heidenheim (DE); Müller, Jürgen, 68259 Mannheim (DE)
(74) Vertreter: Held, Stephan

(56) Entgegenhaltungen:
- US-A- 4 394 485
- US-A- 5 439 749
- US-A1- 2003 144 454

## Beschreibung

Die Erfindung betrifft ein flächiges Verbundmaterial mit einem Kern und mindestens einer mit jeder Flachseite des Kerns verklebten Deckschicht sowie einer Dampfsperre zwischen mindestens einer, vorzugsweise zwischen jeder, Flachseite des Kerns und der (den) Deckschicht(en).

Flächige Verbundmaterialien, die vorzugsweise als Klimatüren ausgebildet sind, sind aus dem Stand der Technik bekannt. Derartige flächige Verbundmaterialien müssen bestimmten Anforderungen hinsichtlich der Dampfdurchlässigkeit genügen, damit deren Einsatz als Klimatüren, vorzugsweise als Haus- und Wohnungseingangstüren, überhaupt sinnvoll ist. Hierzu werden nach dem Stand der Technik zwischen die Deckschichten eines flächigen Verbundmaterials Metallfolien, insbesondere Aluminiumfolien, als Dampfsperren eingeleimt. Derartige bekannte flächige Verbundmaterialien weisen einen Kern auf, dessen beide Flachseiten mit einer ersten Deckschicht und dann mit einer zweiten Deckschicht verklebt sind. Zwischen die erste und die zweite Deckschicht wird jeweils eine Aluminiumfolie eingeleimt. Die Einleimung der Aluminiumfolien zwischen die Deckschichten kann mit verschiedenen Klebstoffsystemen erfolgen. Derartige flächige Verbundmaterialien genügen hinsichtlich der maximalen zulässigen Verformung zwar den Anforderungen der Klasse 2c der nachstehend näher erläuterten DIN EN 12219 (Juni 2000), jedoch ist die Herstellung derartiger Türen aufwendig und teuer.

Der Erfindung liegt die Aufgabe zugrunde, ein flächiges Verbundmaterial bereitzustellen, das vorzugsweise als Klimatür bzw. Fußbodenpaneel eingesetzt werden kann, d.h. hinsichtlich der maximalen zulässigen Verformung den Anforderungen der Klasse 2c gemäß DIN EN 12219 (Juni 2000) genügt. Das flächige Verbundmaterial soll ferner auf einfache Weise herstellbar sein, und die Herstellungskosten sollen im Vergleich zu den Herstellungskosten bekannter Materialien gesenkt werden.

Die US-A-5,439,749 offenbart Türen, die als Dampfsperre übliche Materialien, wie beispielsweise Aluminiumfilme, aufweisen. Diese Dampfsperren werden zwischen Schichten angeordnet und verklebt. Die US-A-4,394,485 offenbart Polyolefingemische, die im Wesentlichen aus speziellem HDPE, mindestens einem Polypropylenpolymer oder -copolymer, einem speziellen LDPE sowie einem Polyethylenpolymer bestehen. Auch gemäß dieser Lehre werden spezielle Dampfsperren, beispielsweise aus Polyethylen oder Aluminium, eingesetzt.

Erfindungsgemäß wird diese Aufgabe durch ein flächiges Verbundmaterial mit einem Kern und mindestens einer mit jeder Flachseite des Kerns verklebten Deckschicht sowie einer Dampfsperre zwischen mindestens einer, vorzugsweise zwischen jeder, Flachseite des Kerns und der (den) Deckschicht(en) gelöst, das dadurch gekennzeichnet ist, dass als Dampfsperre(n) der zur Verklebung dienende Klebstoff vorgesehen ist, der in einer definierten Schichtdicke aufgetragen ist.

Durch den Einsatz des Klebstoffes sowohl zur Verklebung als auch als Dampfsperre ist es möglich, auf die gemäß dem Stand der Technik erforderliche Metallfolie als Dampfsperre zu verzichten. Die Herstellung von flächigen Verbundmaterialien, insbesondere von Klimatüren, wird dadurch erheblich erleichtert, so dass deren Produktion sogar auf kontinuierliche Art und Weise erfolgen kann. Dies spart Kosten. Ferner wird die benötigte Menge des Klebstoffes erheblich reduziert, was folgendes Beispiel verdeutlicht.

Eine klassische Klimatür ist, wie vorstehend erwähnt, im Wesentlichen aus folgenden Bestandteilen aufgebaut: Einem Kern, der beidseitig zunächst mit einer inneren Deckschicht, dann einer Aluminiumfolie und schließlich einer äußeren Deckschicht versehen ist. Bei einer Klimatür mit einer Länge von 2 m und einer Breite von 1 m fallen pro Leimfläche 2 m² Klebstofffläche an, was zu einer gesamten Klebstofffläche von 12 m² führt. Bei einem Standard-Auftragsgewicht des Klebstoffes von etwa 200 bis 300 g/m² ergibt sich ein Klebstoffverbrauch von etwa 2,4 bis 3,6 kg pro Tür. Der Einsatz des Klebstoffes sowohl zur Verklebung der einzelnen Schichten als auch als Dampfsperre erfordert lediglich 4 x 2 m², d.h. 8 m², Leimfläche. Legt man das gleiche Standard-Auftragsgewicht wie im Zusammenhang mit einer bekannten Klimatür, die zwei Aluminiumfolien enthält, zugrunde, dann kann der Klebstoffbedarf auf etwa 1,6 bis 2,4 kg, d.h. um etwa 33 %, gesenkt werden.

Die Herstellung des erfindungsgemäßen flächigen Verbundmaterials hat demnach die Vorteile, dass auf einen Bestandteil, nämlich die Metallfolien, verzichtet werden kann, dass ein Verfahrensschritt, nämlich die Verleimung der Metallfolien, entfällt und dass weniger Klebstoff benötigt wird. Die Dampfdurchlässigkeit des erfindungsgemäßen flächigen Verbundmaterials entspricht zumindest der Dampfdurchlässigkeit von bekannten Materialien.

Die Schichtdicke des Klebstoffs wird so gewählt, dass die Klebstofffuge als Dampfsperre dienen kann. Die Wirkung des Klebstoffes als Dampfsperre wird dadurch erzielt, dass dieser ausgehärtet ist und dass vorzugsweise eine durchgehende Klebefuge ausgebildet wird. Letzteres bedeutet, dass der Klebstoff ganzflächig aufgetragen wird.. Der Klebstoff wird vorzugsweise in einer Schichtdicke von etwa 0,04 bis etwa 0,20 mm und insbesondere von etwa 0,08 bis etwa 0,13 mm aufgetragen. Als besonders günstig hat sich eine Schichtdicke des Klebstoffes von etwa 0,08 bis etwa 0,10 mm erwiesen. Das Auftragsgewicht des Klebstoffes liegt vorzugsweise zwischen etwa 40 und etwa 200 g/m², insbesondere zwischen etwa 60 und etwa 130 g/m². Besonders bevorzugt ist ein Auftragsgewicht von etwa 80 bis etwa 100 g/m². Die zu verklebenden Oberflächen werden vor der Verarbeitung vorzugsweise gründlich gesäubert und glatt geschliffen. Der vor dem Auftrag ausreichend geschmolzene Kleber wird vorzugsweise einseitig auf die zu verklebenden Materialien aufgebracht. Zwei zu verklebende Materialien können nach dem Kleberauftrag sofort verpresst werden. Es ist aber auch möglich, dass nach Verleimung aller Bestandteile das gesamte flächige Verbundmaterial verpresst wird. Die Flächenverklebung und Lamierung kann mittels Walzen- oder Düsenauftrag erfolgen. Zum Verpressen können alle üblichen Verfahren angewendet werden. Bevorzugt erfolgt das Auftragen des Klebstoffes sowie die Verpressung des Verbundmaterials in einem kontinuierlichen Rollenpressverfahren.

Die als Dampfsperre dienenden Klebstoffe können verschiedene Klebstofftypen sein. Bevorzugt ist es, reaktive Schmelzklebstoffe, insbesondere reaktiver Polyurethan-Schmelzklebstoffe, und besonders bevorzugt feuchtigkeitsvernetzende reaktive Polyurethan-Schmelzklebstoffe einzusetzen. Letztere haben den Vorteil, dass durch Feuchtigkeit ein vernetzter Feststoff gebildet wird, der sich nicht mehr schmelzen lässt und so eine permanente Dampfsperre bildet. Ferner zeichnen sie sich durch ihre gute Beständigkeit gegenüber aggressiven Stoffen und ihre gute Haftfähigkeit aus. Am meisten bevorzugt ist der Einsatz eines feuchtigkeitsvernetzenden reaktiven 1K-Polyurethan-Schmelzklebstoffes. Vorzugsweise besitzt dieser eine Viskosität von etwa 5.000 bis 20.000 mPas bei 120°C, insbesondere von etwa 8.000 bis 14.000 mPas bei 120°C.

Wie vorstehend erwähnt, wird die Dampfdurchlässigkeit, beispielsweise einer Klimatür, durch die Prüfung der hygrothermischen Eigenschaften ermittelt. Das entsprechende Prüfverfahren, welches auf das Verhalten von Türen zwischen zwei unterschiedlichen Klimaten abstellt, ist in der Deutschen Norm DIN EN 1121 vom Juni 2000 (Ref. Nr. EN 1121: 2000 D) beschrieben. In der Deutschen Norm DIN EN 12219 vom Juni 2000 (Ref. Nr. DIN EN 12219 : 2000-06), wonach die Europäsiche Norm EN 12219 : 1999 den Status einer Deutschen Norm hat, ist das Ergebnis der Prüfung definiert. Das Ergebnis der Prüfung der hygrothermischen Eigenschaften wird in die Klassen 0 (x), 1 (x), 2 (x) und 3 (x) eingeordnet, wobei x das verwendete Prüfklima bezeichnet. Marktübliche und für den Verbraucher zufriedenstellende Ergebnisse liegen dann vor, wenn die Prüfung der hygrothermischen Eigenschaften zu einer Klassifizierung in Klasse 2 (c) führt. Das erfindungsgemäße flächige Verbundmaterial fällt vorzugsweise in die Klasse 2 (c), besonders bevorzugt in die Klassen 2 (c) und 3 (d) und ganz besonders bevorzugt in die Klassen 2 (c), 3 (d) und 2 (e).

Eine Dampfsperre im Sinne der vorliegenden Erfindung liegt dann vor, wenn das erfindungsgemäße flächige Verbundmaterial den Anforderungen der Klasse 2 (c) genügt.

Das erfindungsgemäße flächige Verbundmaterial ist vorzugsweise als Tür, insbesondere als Klimatür ausgebildet. Unter einer Klimatür versteht der Fachmann Türen, die auf ihren Außenseiten zwei unterschiedlichen Klimaten ausgesetzt werden, wie vorzugsweise Haus- oder Wohnungseingangstüren, aber beispielsweise auch Keller- und Korridortüren

Der Kern kann individuell ausgestaltet sein, wobei ein Kern auf Basis von dämmenden Materialien, auf Basis von Röhrenspan, auf Basis von Leichtbauplatten, auf Basis von Leichtfaserplatten und/oder auf Basis von Holzwerkstoffen bevorzugt ist. Ist das flächige Verbundmaterial als Tür ausgebildet, dann ist der Kern vorzugsweise ein Türrahmen. Dieser ist vorzugsweise ein Holztürrahmen oder ein holzähnlicher Türrahmen. Bevorzugt sind Holztürrahmen aus Fichten- oder Kiefernholz. Der Türrahmen kann ferner einen Dämmschutz, vorzugsweise einen Polyurethan-Kern, aber auch übliche Stabilisierungsplatten, Verstärkungsstreben und/oder Metallverstärkungen enthalten.

Die Deckschichten können ebenfalls individuell ausgestaltet sein. Vorzugsweise handelt es sich bei den Deckschichten um Holschichten oder holzähnliche Schichten, insbesondere Sperrholzschichten, Dünnspanplatten, MDF-Platten (mittelverdichtete Faserplatten), HDF-Platten (hochverdichtete Faserplatten), Massivholzschichten, Hartfaserplatten, Schichten aus Fichten-, Lärchen- oder Eichenholz, Massivholz-Dünnplatten, und/oder Holzwerkstoffplatten. Besonders bevorzugt sind Sperrholzschichten, MDF- und HDF-Platten, da diese kostengünstig sind und gut weiterverarbeitet werden können.

Ist in der vorliegenden Erfindung von Holz die Rede, dann soll darunter unbehandeltes Holz sowie alle aus Holz zusammengesetzten Werkstoffe, d.h. Holzwerkstoffe, verstanden werden.

Die Dicke der Deckschichten beträgt vorzugsweise etwa 0,5 bis etwa 16 mm, insbesondere etwa 2 bis etwa 12 mm. Besonders bevorzugt ist eine Dicke von etwa 3 bis etwa 9 mm, da derartige Dicken die nötige Stabilität bei relativ geringen Kosten liefern.

Besonders bevorzugt ist es, dass jede dem Kern abgewandte Flachseite der Deckschichten mit je einer weiteren Schicht sowie je einer dazwischen liegenden zusätzlichen Dampfsperre versehen ist. Auch in dieser Ausführungsform handelt es sich bei den Dampfsperren vorzugsweise um den zur Verklebung dienenden Klebstoff, der ebenfalls in einer definierten Schichtdicke aufgetragen ist. Eine derartige Konstruktion liefert hinsichtlich der hygrothermischen Eigenschaften noch vorteilhaftere Ergebnisse.

Die voranstehend genannte weitere Schicht ist vorzugsweise eine Holzschicht oder eine holzähnliche Schicht, insbesondere eine Massivholzschicht, eine Sperr-, eine Spann-, eine MDF- und/oder eine HDF-, eine OSB- (oriented strand board) oder eine HPL-Schicht (high pressure laminate). Besonders bevorzugt sind Sperrholz- und MDF-Schichten, da diese kostengünstig und gut weiterverarbeitbar sind. Die Dicke dieser weiteren Schicht beträgt etwa 0,5 bis etwa 10 mm, insbesondere etwa 2 bis etwa 10 mm und insbesondere etwa 3 bis etwa 8 mm.

Besonders bevorzugte erfindungsgemäße flächige Verbundmaterialien haben nachfolgend geschilderten Aufbau:

Einen Kern, der zunächst auf beiden Flachseiten mit einer Deckschicht verklebt ist. Auf jeder der dem Kern abgewandten Flachseite der Deckschichten befindet sich jeweils eine weitere ebenfalls verklebte Schicht. Bei dieser Konstruktion ist es bevorzugt als Kern einen Türholzrahmen af Basis von Massivholz, insbesondere Fichte-Massivholz, Deckschichten auf Basis von Sperrholz und weitere Schichten auf Basis von Massivholz, insbesondere Fichte-Massivholz, einzusetzen. Als Kleber wird vorzugsweise ein feuchtigkeitsvernetzender reaktiver 1K-Polyurethan-Schmelzklebstoff eingesetzt. Bei dieser Ausführungsform beträgt die Dicke der Deckschichten etwa 4 mm, die Dicke der weiteren Schichten etwa 6 mm und der Klebstoff wird vorzugsweise in einer Schichtdicke von 0,08 bis 0,10 mm aufgetragen.

Die erfindungsgemäßen flächigen Verbundmaterialien können auch als Fußbodenpaneele ausgebildet sein. Derartige Fußbödenpaneele werden heute vielfach, z. B. in Großbauten, öffentlichen Gebäuden, Hotels und Banken, eingesetzt. Dabei werden etwa 60 cm x 60 cm große beschichtete Fußbodenplatten in ein Gitterraster auf Stelzen eingelegt, so dass zwischen Beton und Fertigfußboden ein Hohlraum von etwa 20 cm Höhe entsteht. Dort laufen verschiedene Versorgungs- und/oder Elektroleitungen, an die durch Zugriff von oben leicht herangekommen werden soll. Die Fußbodenplatten bestehen im Wesentlichen aus Spanplatten einer Dicke von etwa 40 mm. Je nach Anforderungen können aber auch mineralische oder mineralisch gebundene Platten zum Einsatz kommen. Die Fußbodenplatte ist ständig zwei unterschiedlichen Klimaten und deren Belastung und Problematik ausgesetzt. Insbesondere bereitet Kondensfeuchte im Hohlraum Probleme, die je nach Art der Fußbodenplatte unterschiedlich stark aufgenommen wird. Um dies zu verhindern, werden die Fußbodenplatten rückseitig mit Blech beschichtet. Anstelle der rückseitig mit Blech beschichteten Platten kann das erfindungsgemäße flächige Verbundmaterial eingesetzt werden, was ebenfalls den Eintritt von Feuchtigkeit erschwert bzw. verhindert. In diesem Fall ist es bevorzugt, dass eine Deckschicht der Fußbodenbelag, der Kern der als Dampfsperre fungierende Klebstoff und die andere Deckschicht die Trägerplatte ist.

Die Erfindung wird anhand der nachfolgenden Ausführungsbeispiele und Figuren noch näher erläutert.

### Beispiel 1

Ein Türrohling mit einem Fichte-Massivholzrahmen als Kern (Dicke 50 mm), dessen Flachseiten jeweils mit einer MDF-Platte (Dicke 9 mm) versehen wurden, wurde wie nachstehend beschrieben gefertigt:

Auf eine gereinigte MDF-Platte wurde im Walzenauftrag einseitig PUR-FECT 9021 (beziehbar von National Starch and Chemical GmbH, Deutschland) aufgetragen. Anschließend wurde auf die MDF-Platte der Massivholzrahmen (plangeschliffen und gereinigt) aufgelegt und mit einer Rollenpresse verpresst. Nach der Verpressung wurde eine zweite MDF-Platte (Klebstoffauftrag analog wie bei erster Platte) auf die andere Flachseite des Massivholzrahmens aufgetragen und verpresst. Zur endgültigen Aushärtung des Klebstoffes wurde der Türrohling 7 Tage bei Normaltemperatur gelagert.

### Technische Anlagedaten:

Roller coater mit Gummiauftragswalze,
Nipp Roller in sehr kleiner Ausführung, dünne Walzen, schwache Presszylinder,
Vorschub 10 m/min,
Klebstoffauftragswalze Metall 140°C,
Auftragsgewicht des Klebstoffes 100 g/m².

### Maße des Türrohlings:

Breite 978 mm,
Höhe 1975 mm,
Dicke 68 mm.

Schloß: Einsteckschloss nach DIN 18251.

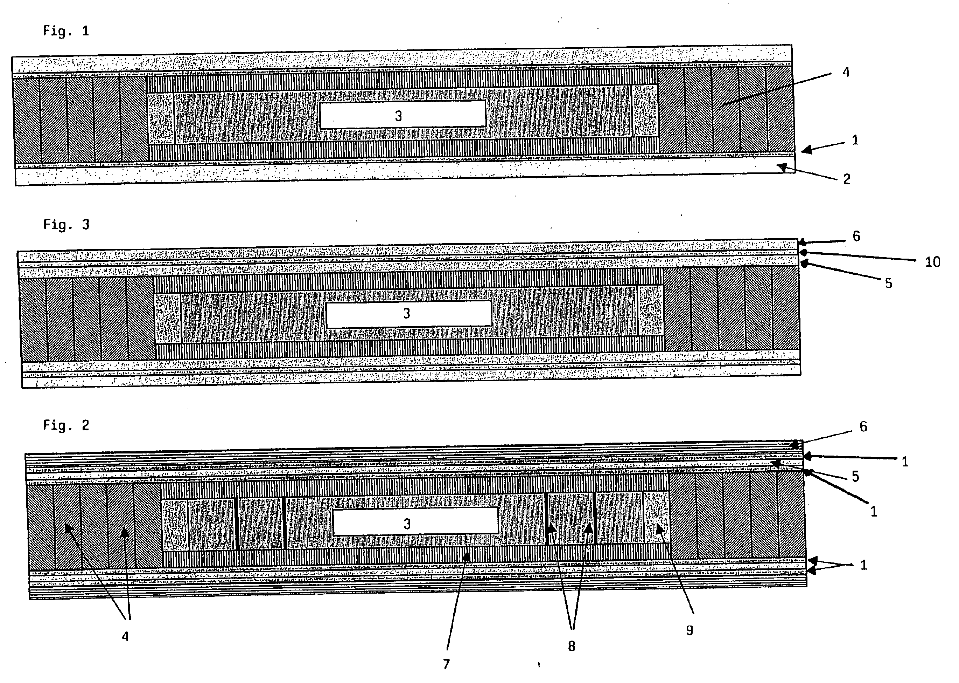

Der gemäß diesem Beispiel hergestellte Türrohling ist in Fig. 1 gezeigt.

### Beispiel 2

Die Fertigung dieses Türrohlings erfolgte im Prinzip wie in Beispiel 1. Bei diesem Türrohling liegt auf beiden Flachseiten des Fichte-Massivholzrahmens (Dicke 40 mm) eine Sperrholzschicht (Dicke 4 mm) und auf diesen jeweils eine Fichte-Massivholzlage (Dicke 6 mm) vor. Zunächst wurde auf eine gereinigte Sperrholzschicht (4 mm) einseitig PUR-FECT 9021 mit einer Walze aufgetragen. Die Sperrholzschicht wurde dann mit einer Fichte-Massivholzlage (6 mm) verklebt und verpresst. Eine zweite Doppelschicht wurde in gleicher Weise hergestellt. Anschließend wurde zunächst die eine und dann die andere Doppelschicht (jede Doppelschicht besteht aus einer Sperrholzschicht mit einer Dicke von 4 mm und einer Fichte-Massivholzlage mit einer Dicke von 6 mm) mit PUR-FECT 9021 als Klebstoff mit dem Fichte-Massivholzrahmen verklebt. Die Verpressung erfolgte nach Auflage beider Decks. Zur endgültigen Aushärtung des Klebstoffes wurde der Türrohling wiederum 7 Tage bei Normaltemperatur gelagert.

Die technischen Anlagedaten sowie die Maße des Türrohlings entsprechen denen von Beispiel 1.

Der gemäß diesem Beispiel hergestellte Türrohling ist in Fig. 2 gezeigt.

### Vergleichsbeispiel 3

Die Herstellung dieses aus dem Stand der Technik bekannten Türrohlings erfolgte nach bekannten Methode wie folgt:

Zur Verklebung kamen ein Türrahmen (wie in Beispiel 1 und 2) einer Dicke von 50 mm und eine über den Fachhandel bezogene, industriell produzierte Decklage. Die Decklage besteht aus zwei ca. 4 mm starken Sperrholzplatten, welche unter Einfügung einer Aluminiumfolie flächig aufeinandergeleimt wurden. Bei dieser Vorfertigung kommen hauptsächlich wässrige PVAC-Klebstoffe zum Einsatz. Auf den Kern wurde mittels Leimspachtel ein zuvor angemischter 2-Komponenten-Flüssig-PUR-Klebstoff aufgebracht. Das Auftragsgewicht betrug etwa 300 bis 350 g/m². Nach beidseitiger Deckauflage wurde der Türrohling etwa 35 bis 45 min in einer Flachpresse gepresst und bis zur endgültigen Aushärtung des Klebstoffes 7 Tage bei Normaltemperatur gelagert.

Der gemäß diesem Vergleichsbeispiel hergestellte Türrohling ist in Fig. 3 gezeigt.

### Beispiel 4

Dieses Beispiel beschreibt die Bestimmung der hygrothermischen Eigenschaften der gemäß den Beispielen 1 und 2 sowie gemäß Vergleichsbeispiel 3 hergestellten Türrohlinge.

Zur Feststellung der hygrothermischen Verformung der Türrohlinge wurde der Türrohling zunächst vermessen. Danach wurde das Türblatt bei Normalklima (20°C; 65 % relative Luftfeuchtigkeit) ausreichend lange spannungsfrei gelagert. Hiernach erfolgte nochmals eine Vermessung des Türrohlings. Es erfolgte dann der Einbau des Türrohlings in eine Stahlzarge. Hierzu wurde der Türrohling in der Stahlzarge befestigt. Nach Abschluss der hygrothermischen Prüfung mit dem Prüfklima c (Seite 1: 23°C; 30 % relative Luftfeuchtigkeit; Seite 2: 3°C; 85 % relative Luftfeuchtigkeit) erfolgte eine spannungsfreie Zwischenlagerung bei Normalklima (20°C; 65 % relative Luftfeuchtigkeit) über einen Zeitraum von sieben Tagen. Danach wurde das Türblatt erneut vermessen und dem Prüfklima d (Seite 1: 23°C; 30 % relative Luftfeuchtigkeit; Seite 2: -15°C) während einer Dauer von sieben Tagen ausgesetzt. Anschließend wurde der Türrohling wieder bei Normalklima (20°C; 65% relative Luftfeuchigkeit) 7 Tage spannungsfrei zwischengelagert. Danach wurde der Türrohling erneut vermessen und dem Prüfklima e (Seite 1: 20°C; -30% relative Luftfeuchtigkeit; Seite 2: Türoberfläche: 75°C bis 85°C) für die Dauer von 25 Stunden ausgesetzt.

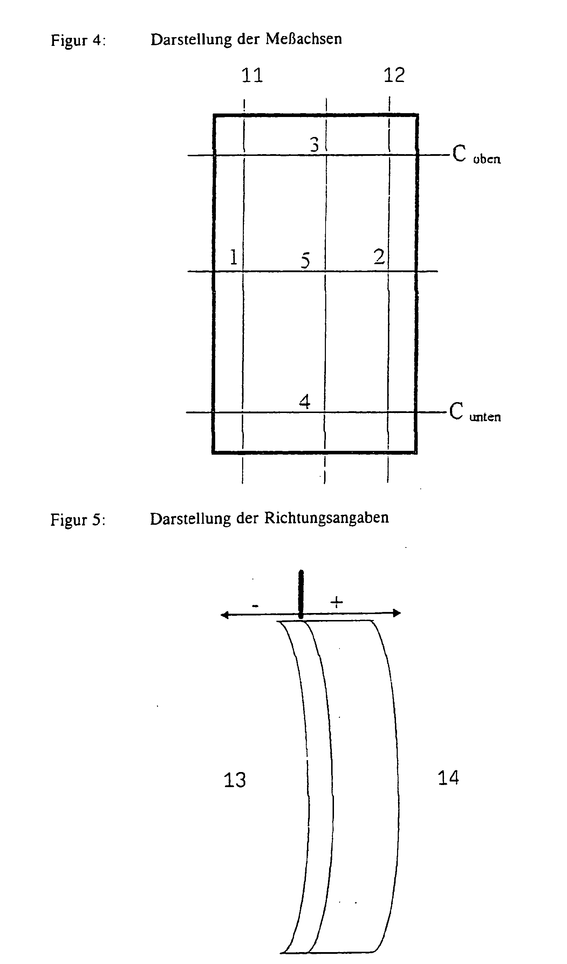

Die dabei auftretenden Verformungen wurden kontinuierlich erfasst. In den Figuren 4 und 5 sind die Messachsen sowie die Richtungsangaben in Bezug auf den vermessenen Türrohling dargestellt (diese gelten für alle Beispiele). In Tabelle 1 ist die Klassifizierung gemäß DIN EN 12219 (Juni 2000) hinsichtlich der maximal zulässigen Verformung dargestellt. Die auftretenden Verformungen sind in Tabelle 2 (für den Türrohling gemäß Beispiel 1), in Tabelle 3 (für den Türrohling gemäß Beispiel 2) und in Tabelle 4 (für den Türrohling gemäß Vergleichsbeispiel 3) dargestellt.

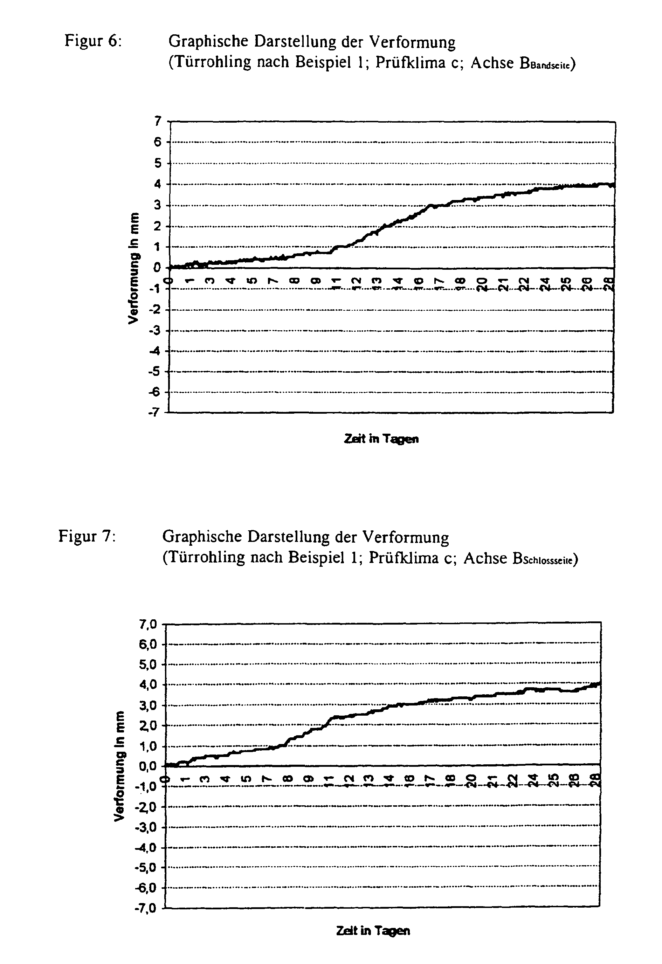

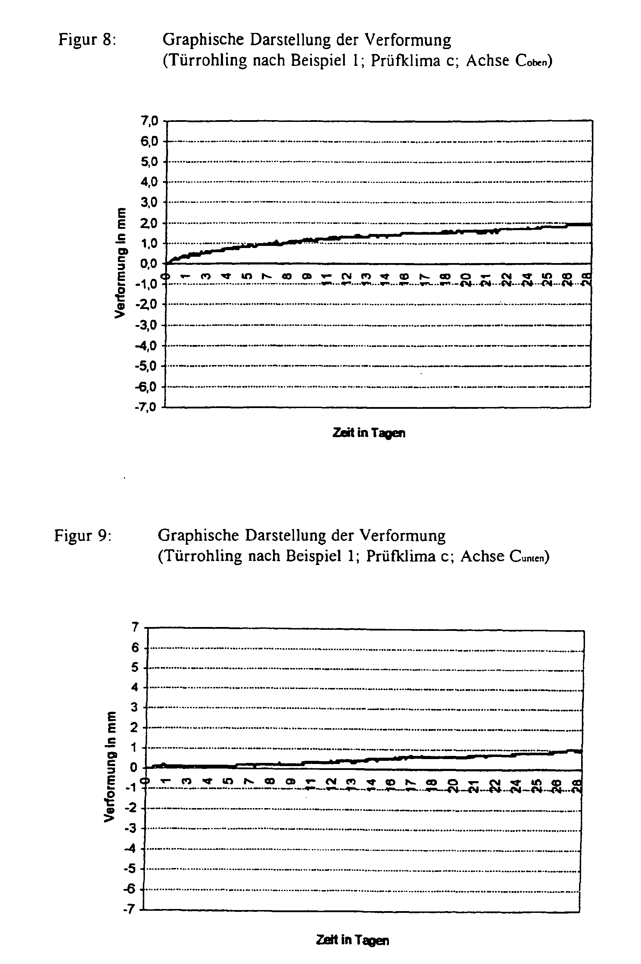

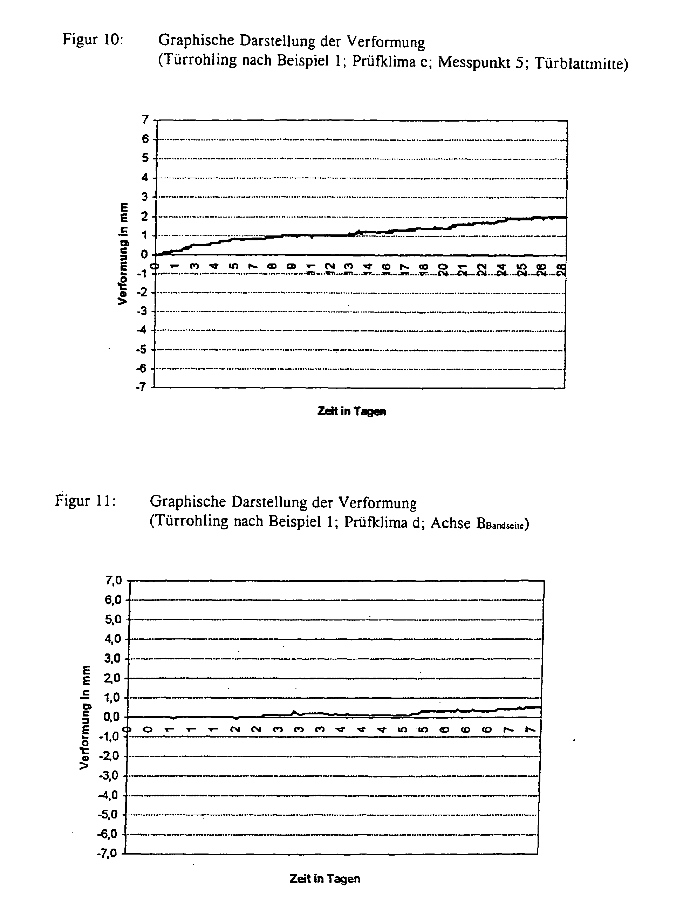

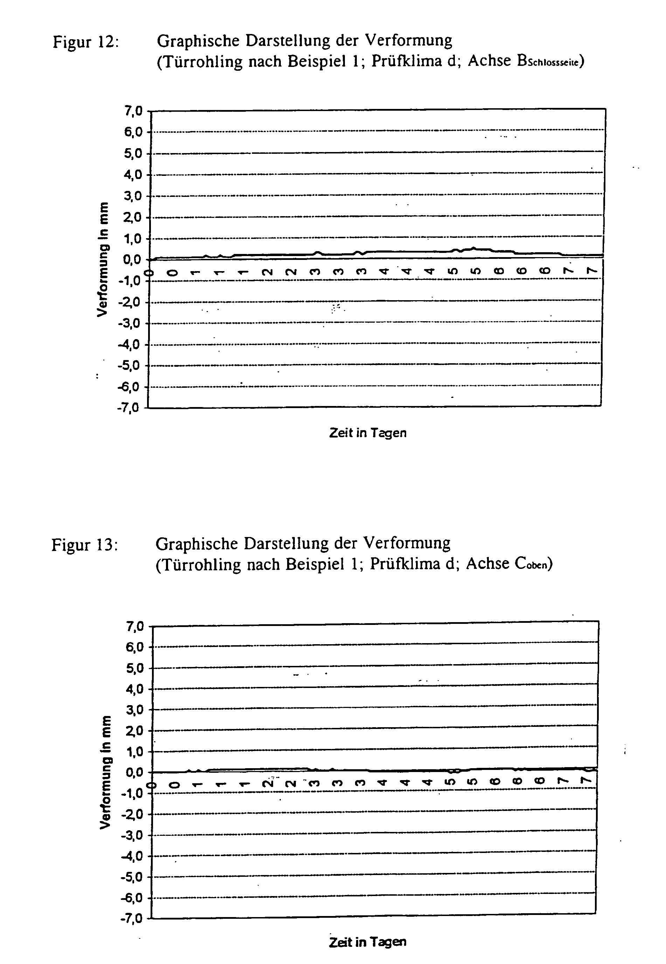

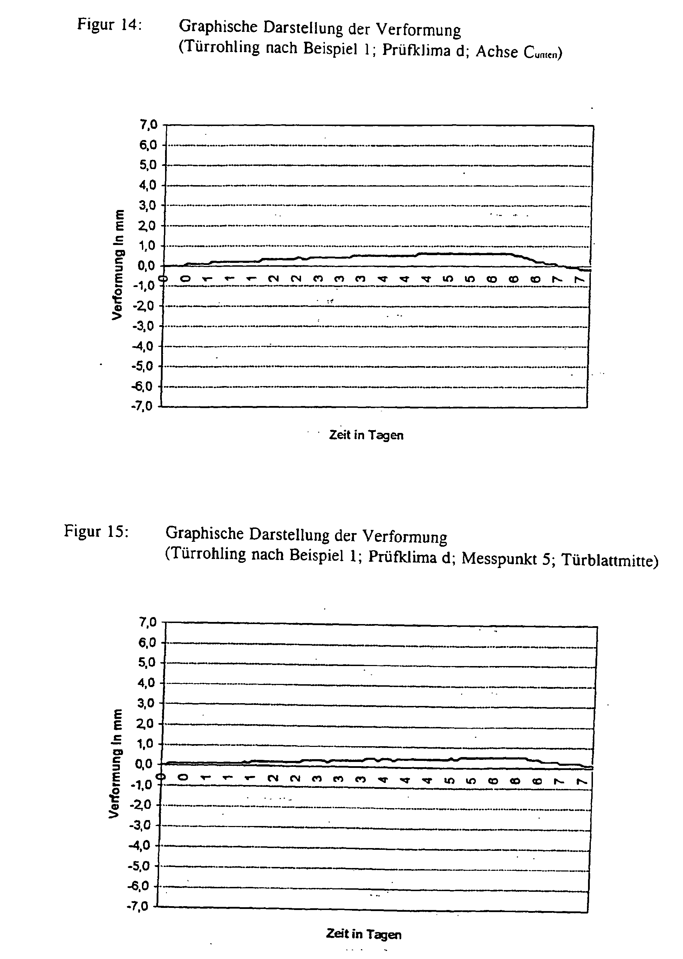

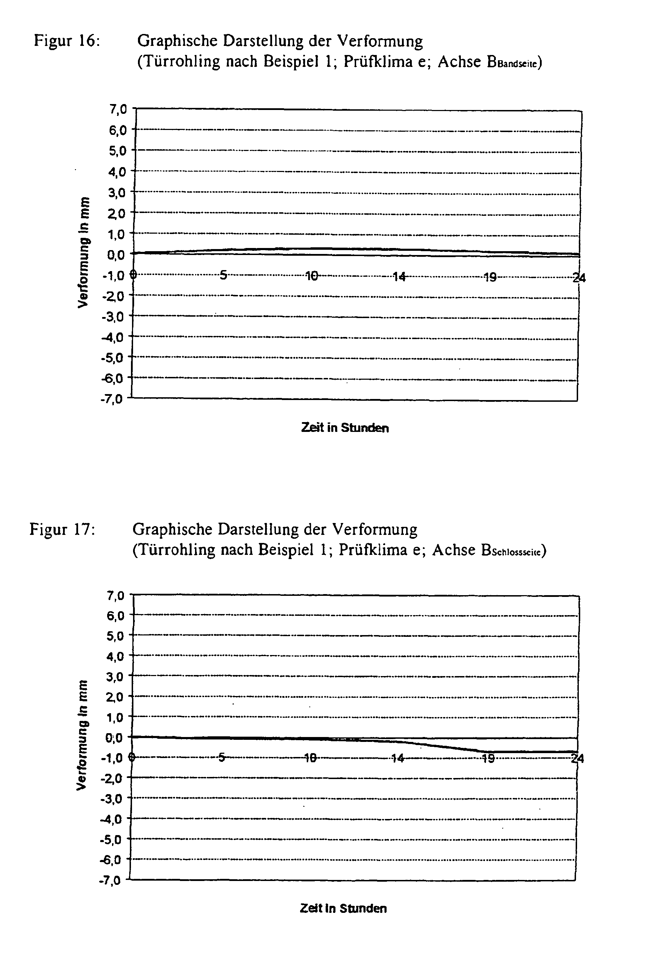

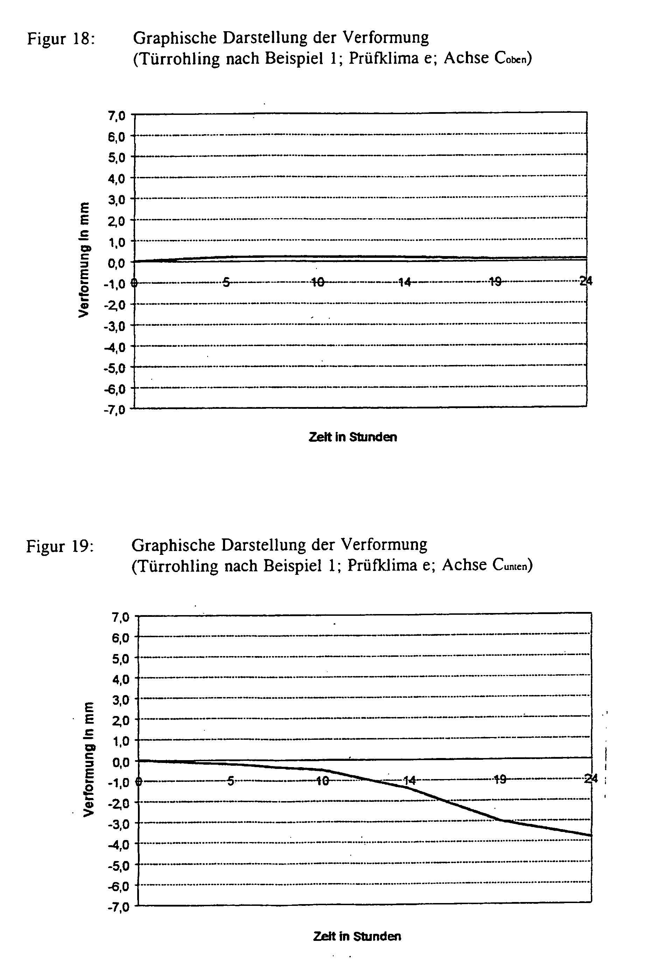

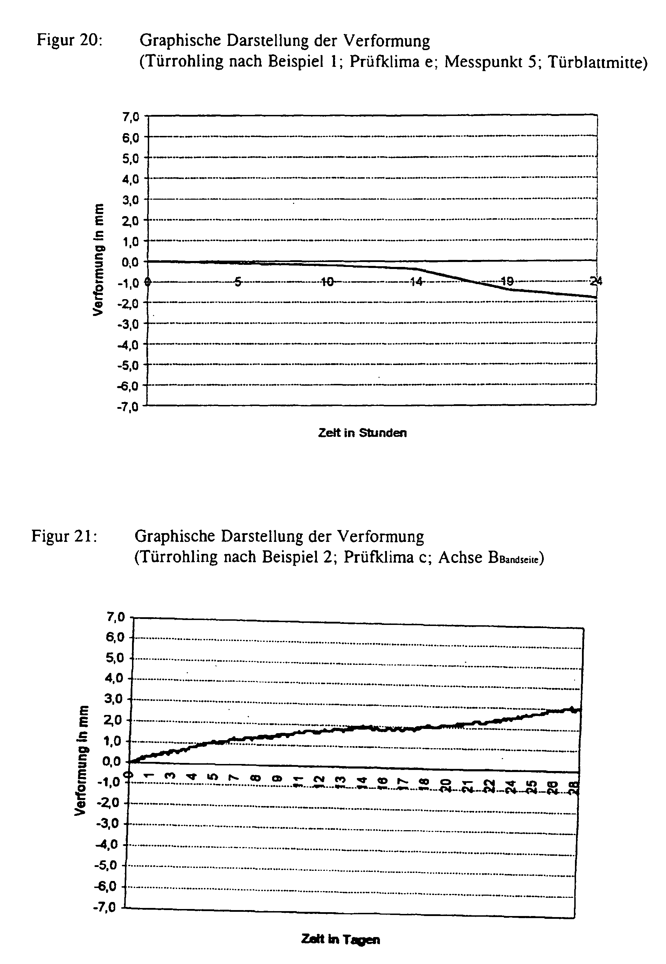

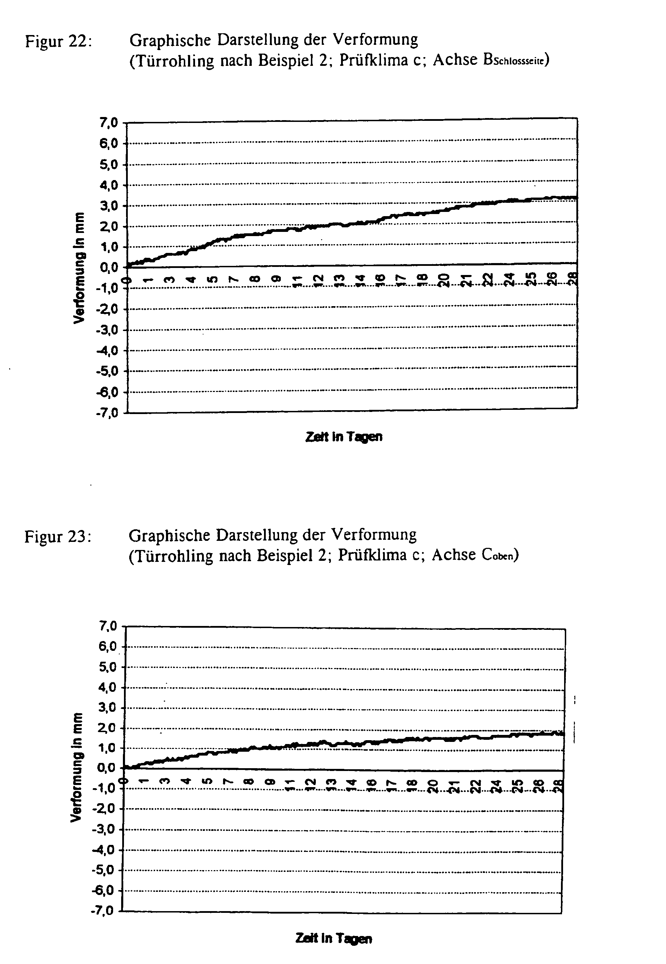

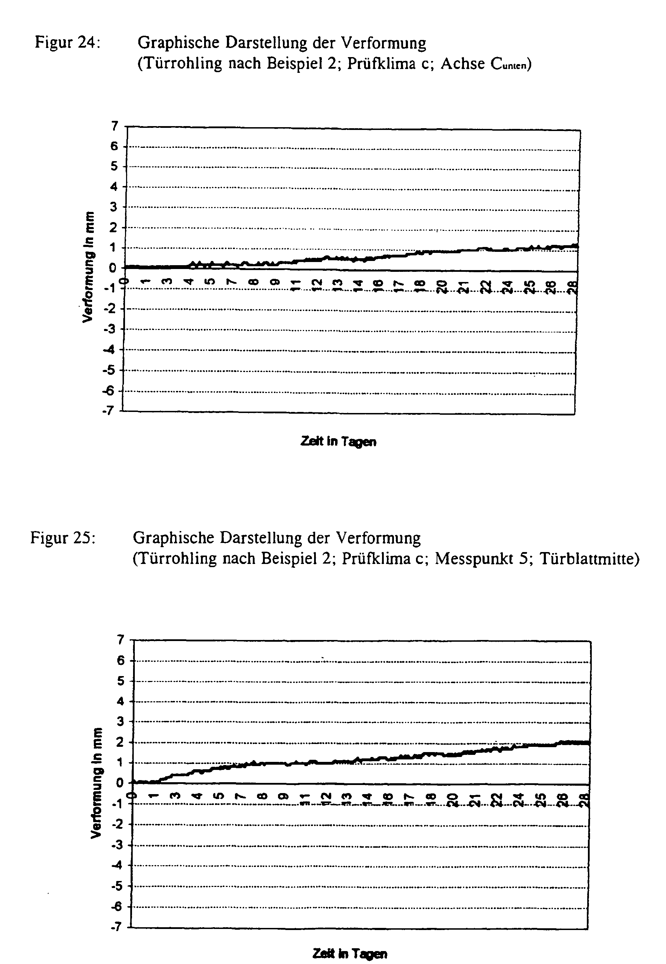

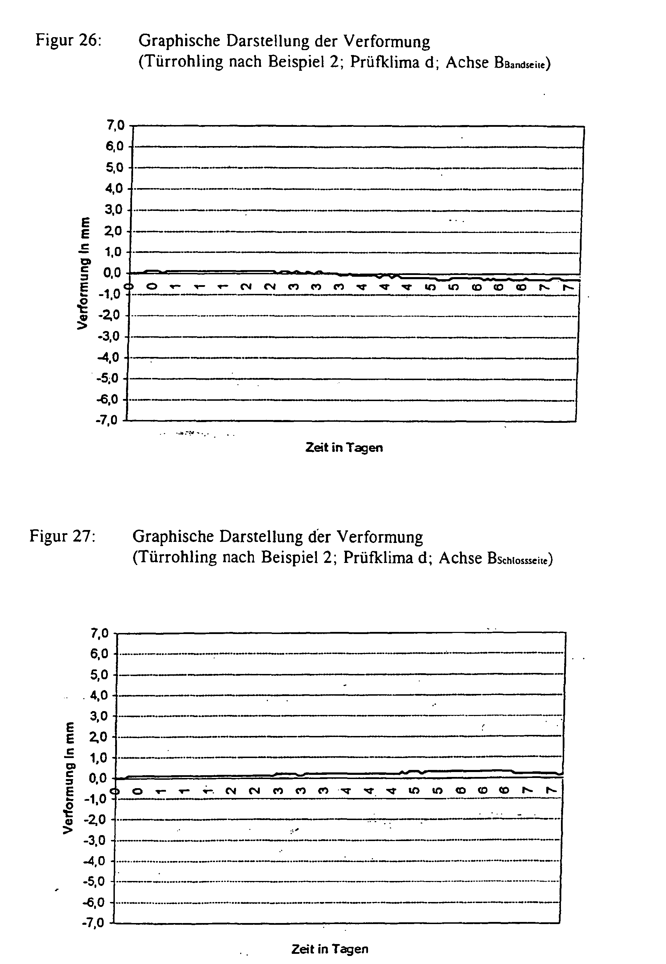

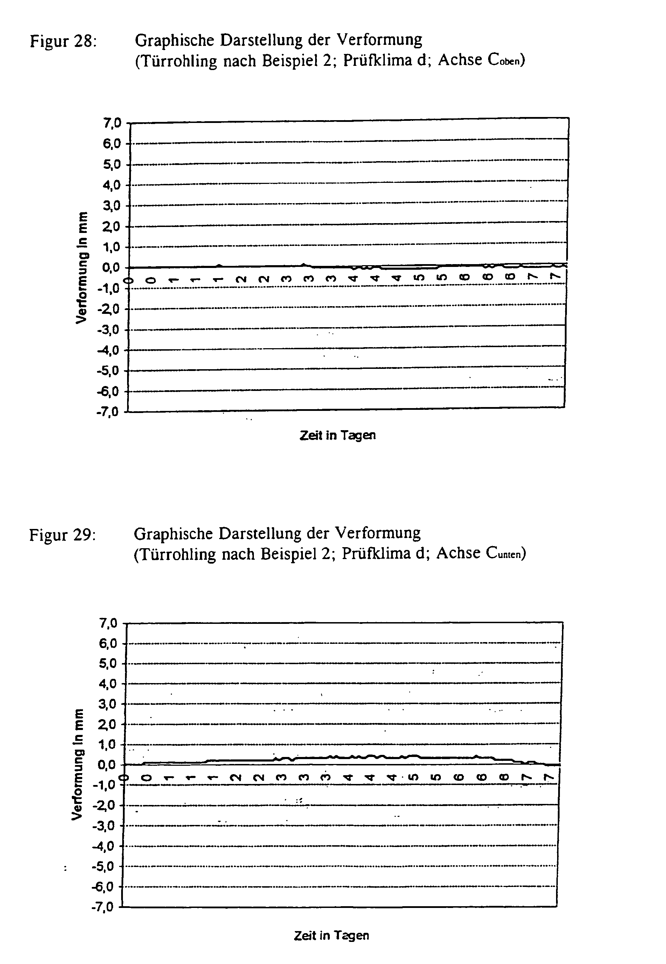

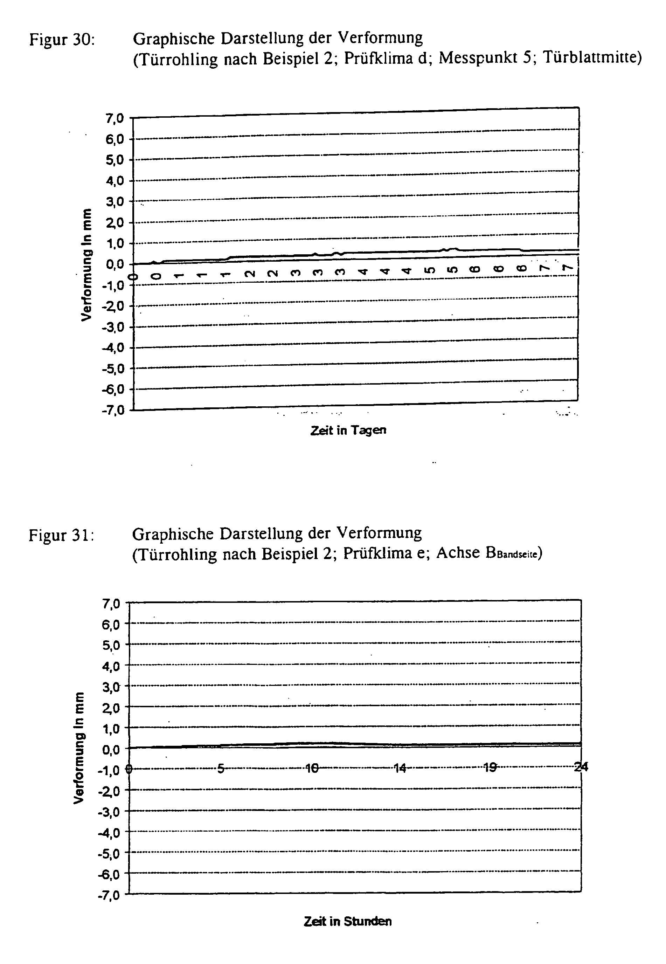

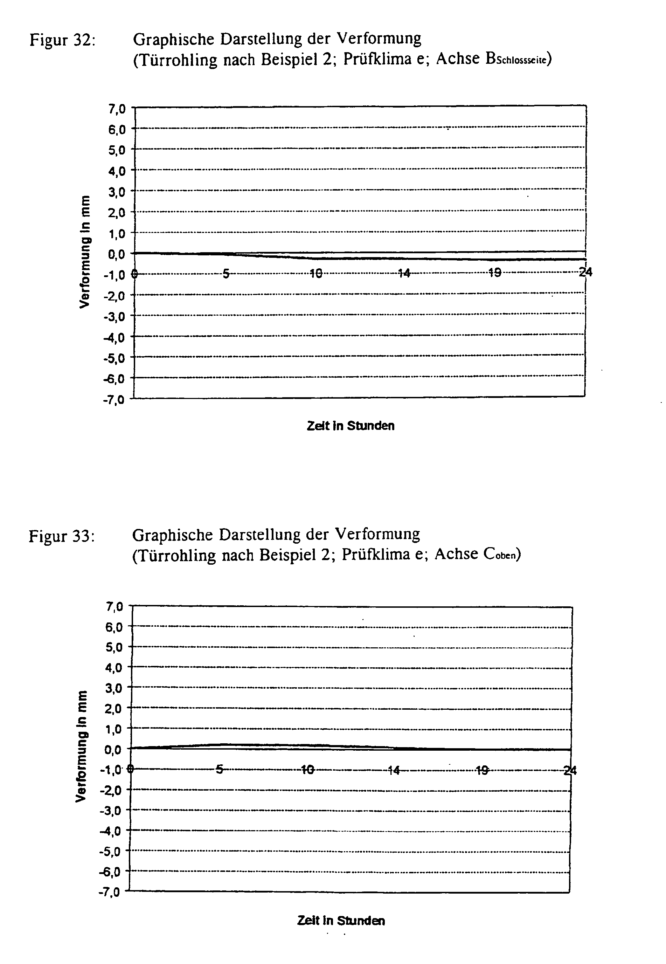

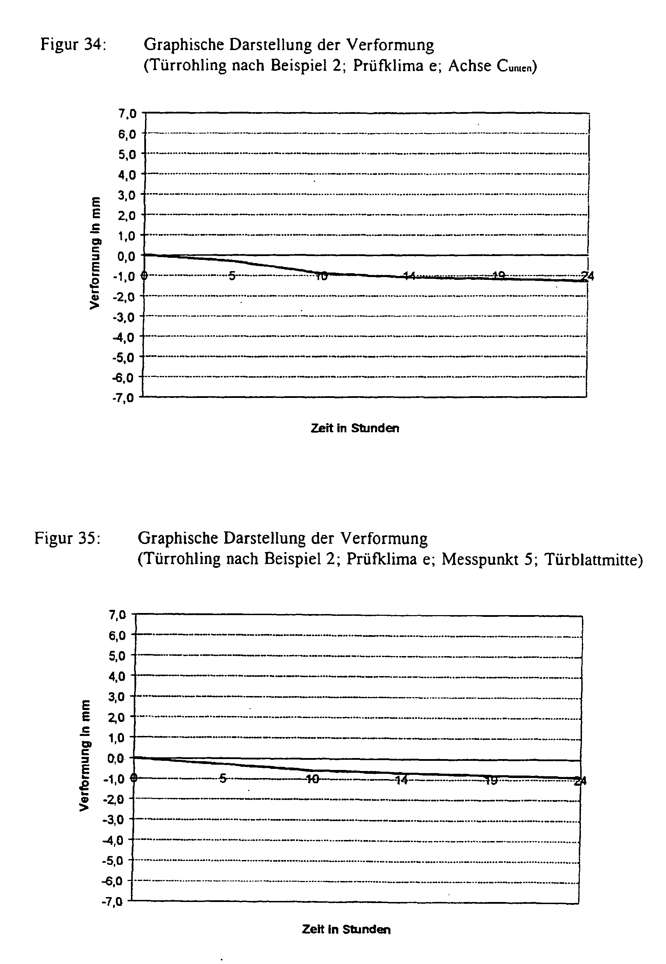

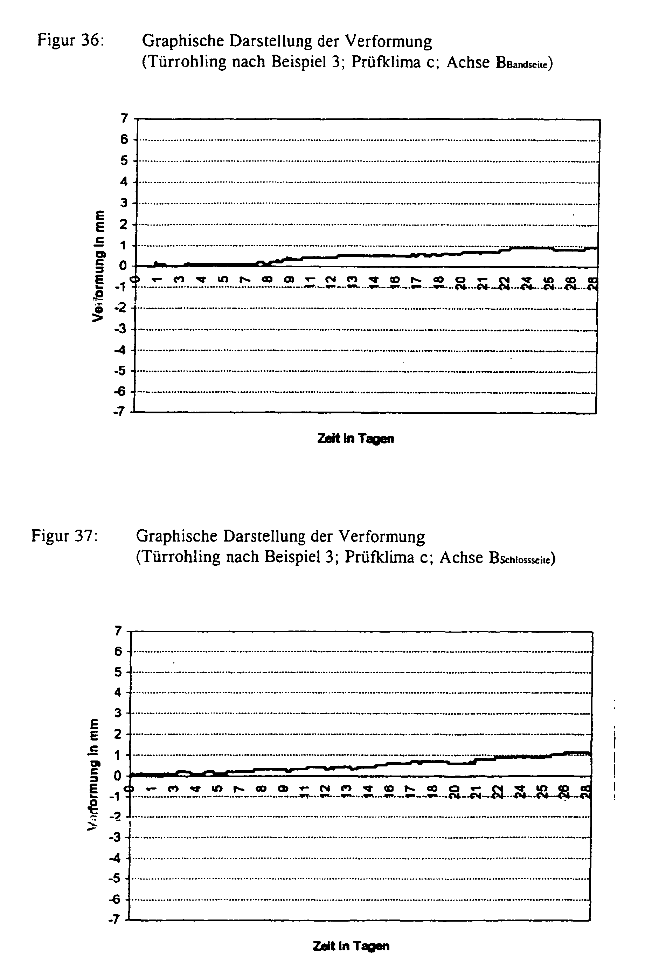

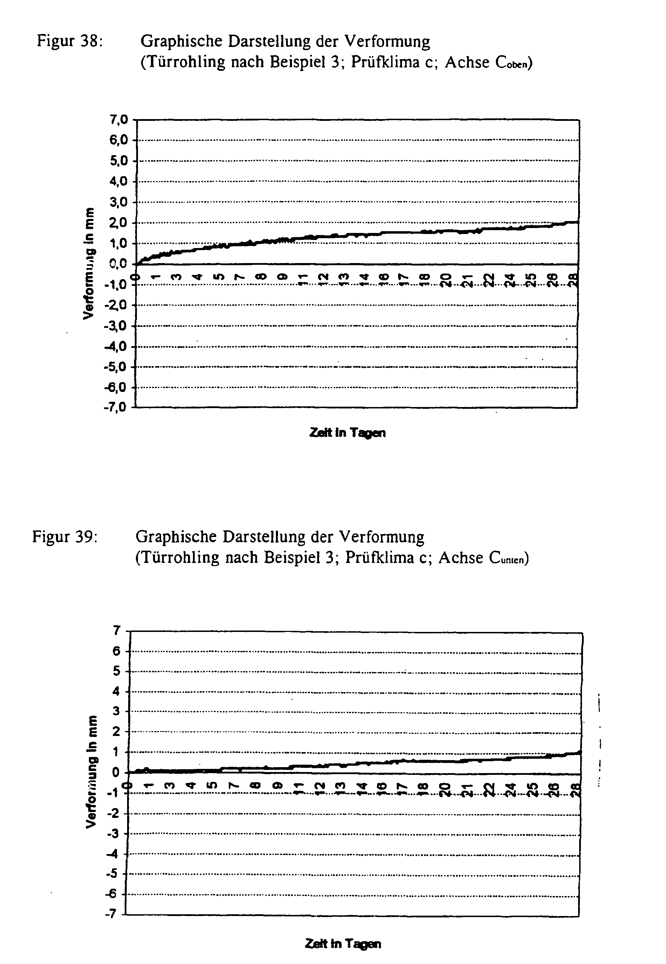

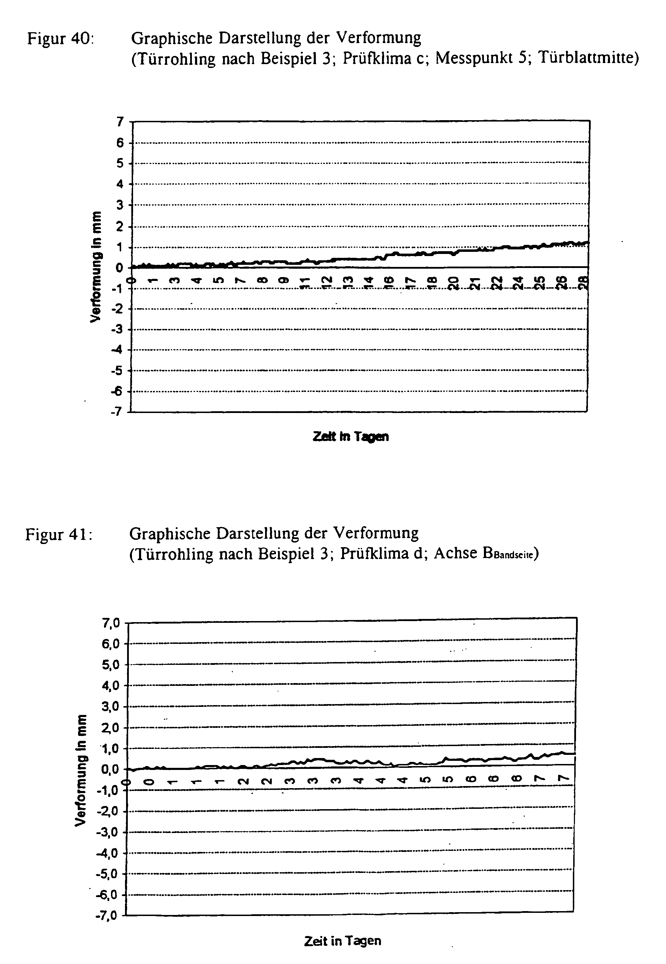

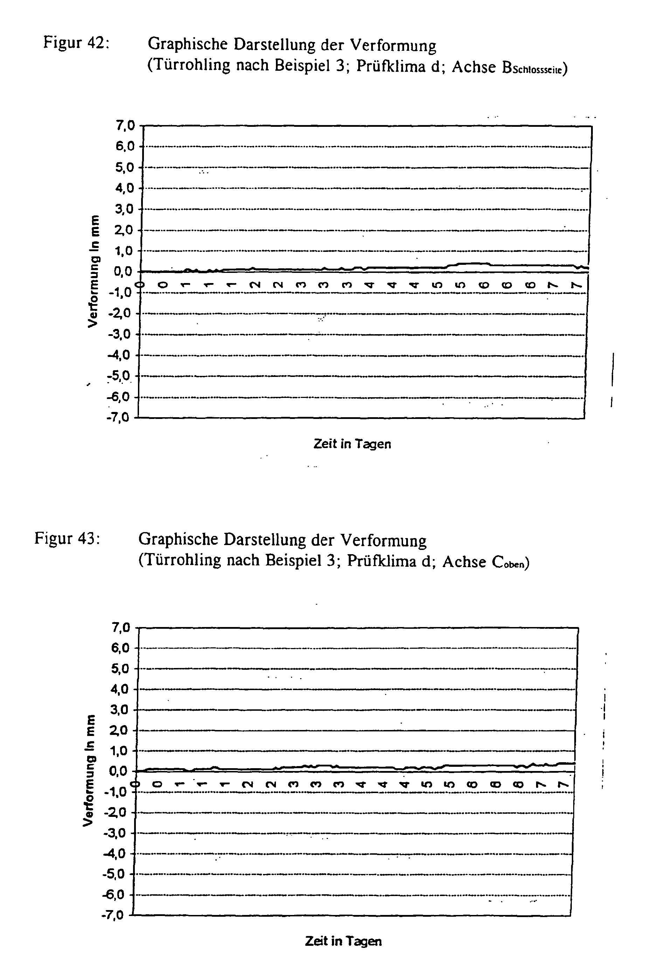

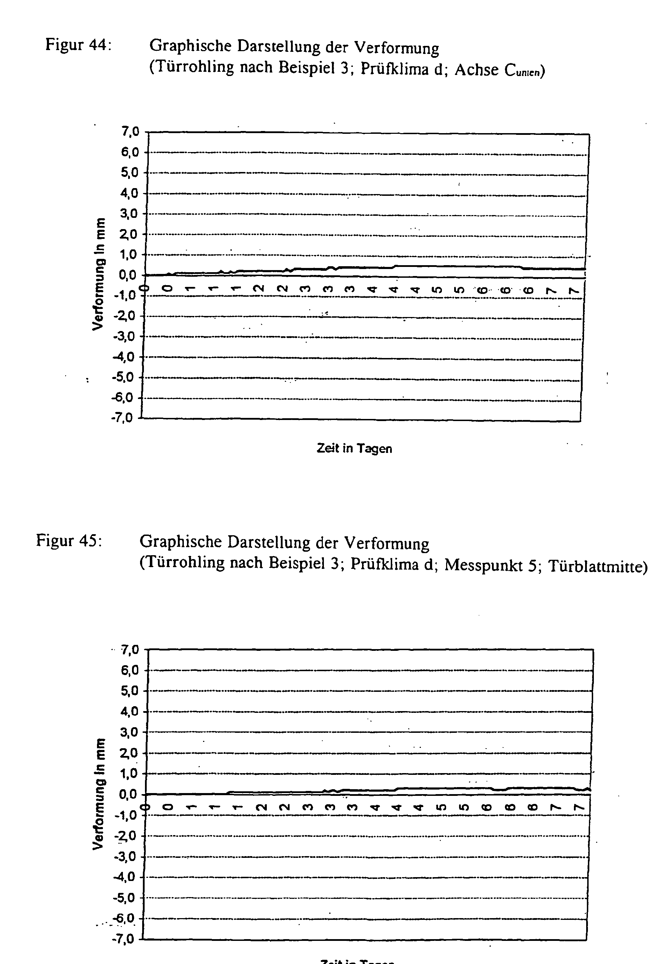

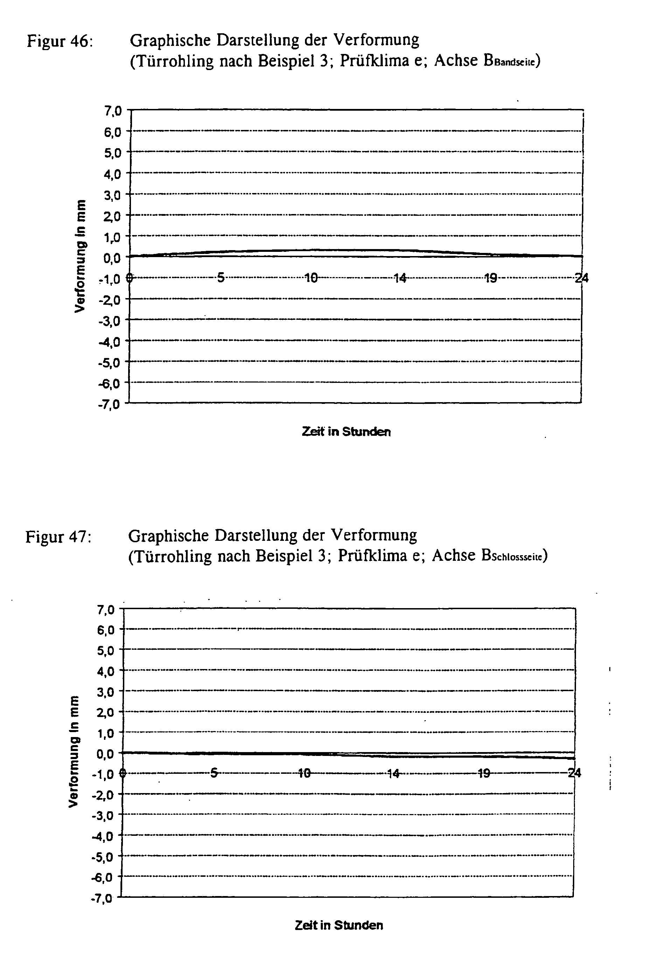

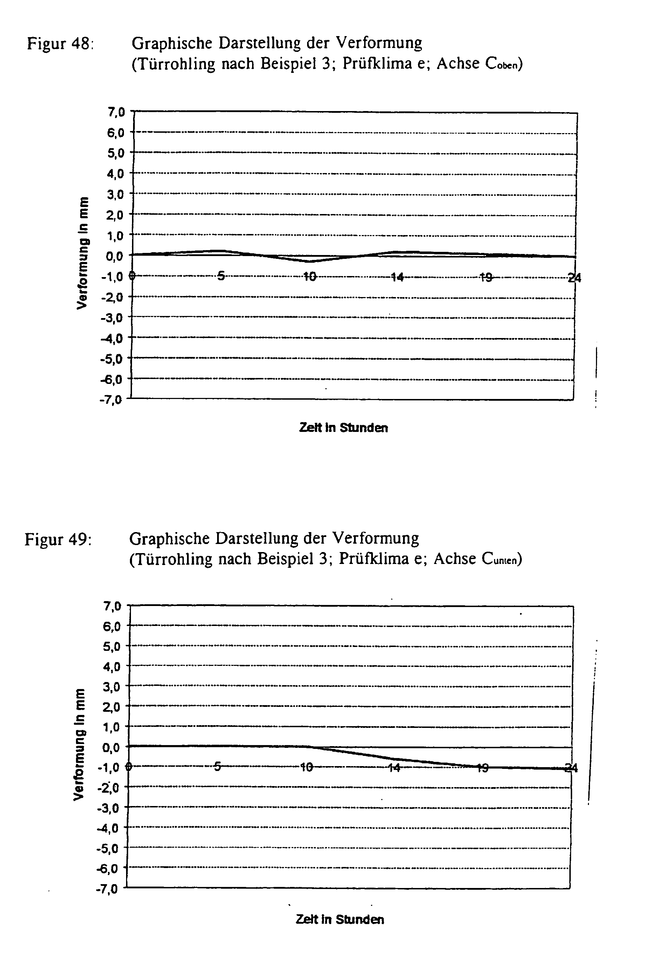

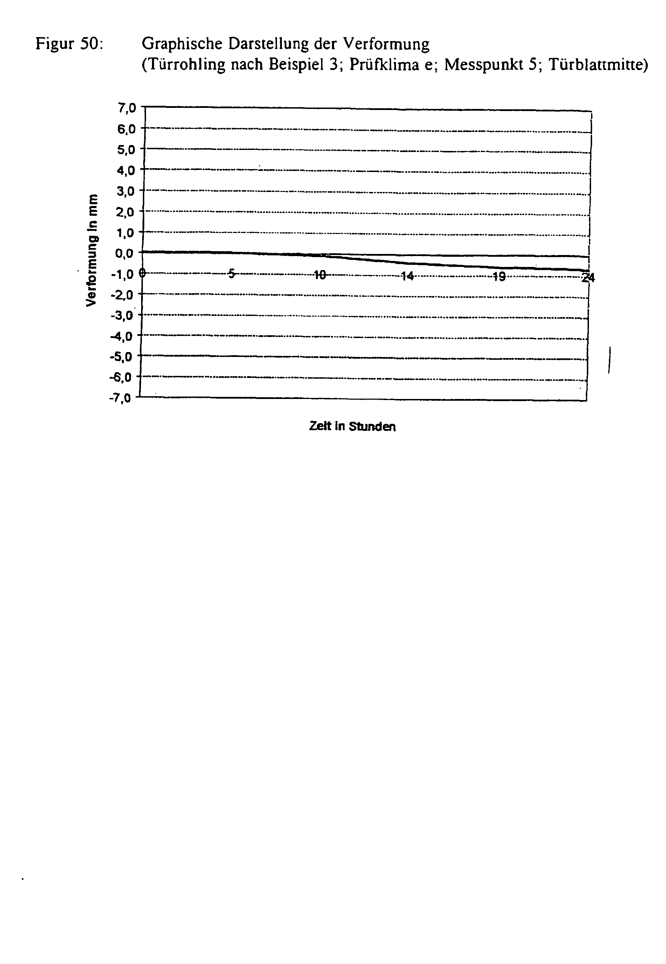

Die Figuren 6 bis 50 zeigen die graphischen Darstellungen der Verformung der Türrohlinge gemäß Beispiel 1 (Figuren 6 bis 20), gemäß Beispiel 2 (Figuren 21 bis 35) sowie gemäß Vergleichsbeispiel 3 (Figuren 36 bis 50). Die Figuren 6 bis 10, 21 bis 25, und 36 bis 40 zeigen die Verformung bei Prüfklima (c). Die Figuren 11 bis 15, 26 bis 30 und 41 bis 45 zeigen die Verformung bei Prüfklima (d). Die Figuren 16 bis 20, 31 bis 35 und 41 bis 45 zeigen die Verformung bei Prüfklima (e).

Die in den Figuren und Tabellen dargestellten Messwerte ergeben folgende Klassifizierungen gemäß DIN EN 12219 (Juni 2000) nach hygrothermischer Prüfung gemäß EN 1121 (Juni 2000):

Der erfindungsgemäße Türrohling gemäß Beispiel 1 erfüllt die Bedingungen der Klassen 2 (c) und 3 (d). Der Türrohling gemäß Beispiel 2 erfüllt die Bedingungen der Klassen 2 (c), 3 (d) und 2 (e). Damit erfüllt sowohl der Türrohling nach Beispiel 1 als auch der Türrohling nach Beispiel 2 die vom Verbraucher geforderte Klasse 2 (c). Beide Türrohlinge genügen auch der Klasse 3 (d), wobei der Türrohling gemäß Beispiel 2 sogar der Klasse 2 (e) genügt. Die erfindungsgemäßen Türrohlinge gemäß den Beispielen 1 und 2 entsprechen daher hinsichtlich ihrer hygrothermischen Verformung, und damit hinsichtlich ihrer Dampfdurchlässigkeit, zumindest den bekannten Türen nach Vergleichsbeispiel 3.

Die in den Figuren aufgeführten Bezugszeichen haben folgende Bedeutung:
(1) Klebstofffuge aus reaktivem Schmelzklebstoff
(2) Mitteldichte Faserplatte
(3) PU-Dämmkern
(4) Massivholzrahmen
(5) Sperrholzschicht
(6) Massivholzlage
(7) Stablisierungsplatte
(8) Verstärkungsstreben
(9) Metallverstärkung
(10) Aluminiumfolie
(11) Bandseite
(12) Schlossseite
(13) Warmseite
(14) Kaltseite

**Tabelle 1: Für die Klassifizierung gemäß DIN EN 12219 (Juni 2000) gelten folgende, maximal zulässigen Verformungen:**

| Prüfparameter | Klasse 0 (x) mm | Klasse 1 (x) mm | Klasse 2 (x) mm | Klasse 3 (x) mm |
|---|---|---|---|---|
| Verwindung, T | *) | 8,0 | 4,0 | 2,0 |
| Längskrüm mung, B | *) | 8,0 | 4,0 | 2,0 |
| Querkrümmung, C | *) | 4,0 | 2,0 | 1,0 |
| Lokale Ebenheit | Ein ohne Zarge geliefertes Türblatt oder ein Türblatt als Teil eines Türelementes muss den Anforderungen nach EN 1530 entsprechen. | | | |
| *) keine Anforderungen | | | | |
| x Prüfklima, das in EN 1121 und/oder in EN 1294 definiert ist | | | | |
| T endgültige Verwindung | | | | |
| B absulute Differenz zwischen endgültiger und anfänglicher Verwindung oder Längskrümmung oder die tatsächliche absolute endgültige Verwindung oder Längskrümmung, je nachdem, welche größer ist | | | | |
| C endgültige Querkrümmung | | | | |

**Tabelle 2: Auftretende Verformungen des Türrohlings gemäß Beispiel 1 (Prüfklimata (c), (d) und (e)):**

| | | | | | |
|---|---|---|---|---|---|
| | 1 | 2 | 3 | 4 | Gewicht |
| Anlieferung | 0,0 | 0,0 | 0,0- | 0,0 | |
| nach Normalklima | 0,0 | 0,0 | 0,0 | 0,0 | |
| nach EN 1121 c | 3,9 | 4,0 | 1,9 | 1,0 | 64,30 kg |
| Achse Absolutwert | B _{Bandseite} 3,9 | B _{Schlossseite} 4,0 | C _{oben} 1,9 | C ᵤₙₜₑₙ 1,0 | 64,30 kg |
| | | | | | |

| | | | | | |
|---|---|---|---|---|---|
| | 1 | 2 | 3 - | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 d | 0,5 | 0,1 | -0,2 | -0,2 | 64,30 kg |
| Achse Absolutwert | B _{Bandseite} 0,5 | B _{Schlossseite} 0,1 | C _{oben} -0,2 | C ᵤₙₜₑₙ -0,2 | 64,30 kg |
| | | | | | |

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 e | 0,1 | -0,7 | 0,1 | -3,7 | 64,30kg |
| Achse Absolutwert | B _{Bandseite} 0,1 | B _{Schlosseite} -0,7 | C _{oben} 0,1 | C ᵤₙₜₑₙ -3,7 | 64,30 kg |

**Tabelle 3: Auftretende Verformungen des Türrohlings gemäß Beispiel 2 (Prüfklimata (c), (d) und (e)):**

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 c | 3,0 | 3,2 | 1,8 | 1,2 | 55,10 kg |
| Achse Absolutwert | B _{Bandseite} 3,0 | B _{Schlosseite} 3,2 | C _{oben} 1,8 | C ᵤₙₜₑₙ 1,2 | 55,10 kg |
| | | | | | |

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 d | -0,3 | 0,2 | -0,2 | -0,1 | 55,10 kg |
| Achse Absolutwert | B _{Bandseite} -0,3 | B _{Schlossseite} 0,2 | C _{oben} -0,2 | C ᵤₙₜₑₙ -0,1 | 55,10 kg |
| | | | | | |

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 e | 0,1 | -0,4 | 0,0 | -1,3 | 55,10 kg |
| Achse Absolutwert | B _{Bandsseite} 0,1 | B _{Schlossseite} -0,4 | C _{oben} 0,0 | C ᵤₙₜₑₙ -1,3 | 55,10 kg |

**Tabelle 4: Auftretende Verformungen des Türrohlings gemäß Vergleichsbeispiel 3 (Prüfklimata (c), (d) und (e)):**

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 c | 0,9 | 1,0 | 2,0 | 1,1 | 63,50 kg |
| Achse Absolutwert | B _{Bandseite} 0,9 | B _{Schlossseite} 1,0 | C _{oben} 2,0 | C ᵤₙₜₑₙ 1,1 | 63,50 kg |
| | | | | | |

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 d | 0,5 | 0,2 | 0,4 | 0,4 | 63,50 kg |
| Achse Absolutwert | B _{Bandseite} 0,5 | B _{Schlossseite} 0,2 | C _{oben} 0,4 | C ᵤₙₜₑₙ 0,4 | 63,50 kg |
| | | | | | |

| | | | | | |
|---|---|---|---|---|---|
| | 1 | 2 | 3 | 4 | Gewicht |
| Anlieferung | 0,0 | 0,0 | 0,0 | 0,0 | |
| nach Normalklima | 0,0 | 0,0 | 0,0 | 0,0 | |
| nach EN 1121 e | 0,0 | -0,3 | 0,0 | -1,1 1 | 63,50 kg |
| Achse Absolutwert | B _{Bandseite} 0,0 | B _{Schlosseite} -0,3 | C _{oben} 0,0 | C ᵤₙₜₑₙ -1,1 | 63,50 kg |

## Patentansprüche

1. Flächiges Verbundmaterial mit einem Kern und mindestens einer mit jeder Flachseite des Kerns verklebten Deckschicht sowie einer Dampfsperre zwischen mindestens einer Flachseite des Kerns und der Deckschicht, **dadurch gekennzeichnet, dass** als Dampfsperre der zur Verklebung dienende reaktive Schmelzklebstoff vorgesehen ist, der in einer definierten Schichtdicke aufgetragen ist, und dass die Deckschicht eine Holzschicht ist.

2. Flächiges Verbundmaterial nach Anspruch 1, **dadurch gekennzeichnet, dass** zwischen jeder Flachseite des Kerns und jeder Deckschicht eine Dampfsperre vorgesehen ist, und dass als Dampfsperren der zur Verklebung dienende reaktive Schmelzklebstoff vorgesehen ist, der in einer definierten Schichtdicke aufgetragen ist, und dass die Deckschichten Holzschichten sind.

3. Flächiges Verbundmaterial nach einem der vorangegangenen Ansprüche, **dadurch gekennzeichnet, dass** das flächige Verbundmaterial als Tür, bevorzugt als Klimatür, und insbesondere als Haus- oder Wohnungseingangstür, ausgebildet ist.

4. Flächiges Verbundmaterial nach einem der vorangegangenen Ansprüche, **dadurch gekennzeichnet, dass** das flächige Verbundmaterial als Fußbodenpaneel ausgebildet ist.

5. Flächiges Verbundmaterial nach einem der vorangegangenen Ansprüche, **dadurch gekennzeichnet, dass** der Kern als Türrahmen ausgebildet ist.

6. Flächiges Verbundmaterial nach Anspruch 5, **dadurch gekennzeichnet, dass** in dem Türrahmen ein Dämmschutz vorgesehen ist.

7. Flächiges Verbundmaterial nach Anspruch 6, **dadurch gekennzeichnet, dass** der Dämmschutz ein Polyurethan-Dämmkern ist.

8. Flächiges Verbundmaterial nach einem der vorangegangenen Ansprüche, **dadurch gekennzeichnet, dass** die Holzschicht(en) eine Schicht aus Sperrholz, eine Dünnspanplatte, eine MDF-Platte, eine HDF-Platte, eine Massivholzschicht, eine Hartfaserplatte, eine Schicht aus Fichten-, Lärchen- oder Eichenholz, eine Massivholz-Dünnplatte und/oder eine Holzwerkstoffplatte, und insbesondere eine Schicht aus Sperrholz, eine MDF- oder eine HDF-Platte, ist.

9. Flächiges Verbundmaterial nach einem der vorangegangenen Ansprüche, **dadurch gekennzeichnet, dass** die Dicke der Holzschicht(en) etwa 0,5 bis etwa 16 mm, vorzugsweise etwa 2 bis etwa 12, und insbesondere etwa 3 bis etwa 9 mm, beträgt.

10. Flächiges Verbundmaterial nach einem der vorangegangenen Ansprüche, **dadurch gekennzeichnet, dass** die dem Kern abgewandte Flachseite jeder Holzschicht mit mindestens einer weiteren Schicht sowie mindestens einer dazwischenliegenden Dampfsperre verklebt ist, wobei als Dampfsperre der zur Verklebung dienende reaktive Schmelzklebstoff vorgesehen ist, der in einer definierten Schichtdicke aufgetragen ist.

11. Flächiges Verbundmaterial nach einem der vorangegangenen Ansprüche, **dadurch gekennzeichnet, dass** die weitere(n) Schicht(en) eine Holzschicht, vorzugsweise eine Massivholzschicht, eine Sperrholzschicht, eine MDF-Schicht, eine HDF-Schicht, eine OSB-Schicht oder eine HPL-Schicht, und insbesondere eine Massivholzschicht, ist.

12. Flächiges Verbundmaterial nach einem der vorangegangenen Ansprüche, **dadurch gekennzeichnet, dass** die Dicke der weiteren Schicht(en) etwa 0,5 bis etwa 10 mm, vorzugsweise etwa 2 bis etwa 10 mm, und insbesondere etwa 3 bis etwa 8 mm, beträgt.

13. Flächiges Verbundmaterial nach Anspruch 12, **dadurch gekennzeichnet, dass** der reaktive Schmelzklebstoff ein reaktiver Polyurethan-Schmelzklebstoff ist.

14. Flächiges Verbundmaterial nach Anspruch 13, **dadurch gekennzeichnet, dass** der reaktive Polyurethan-Schmelzklebstoff ein feuchtigkeitsvernetzender reaktiver Polyurethan-Schmelzklebstoff, insbesondere ein feuchtigkeitsvernetzender, reaktiver 1K-Polyurethan-Schmelzklebstoff, ist.

15. Flächiges Verbundmaterial nach einem der vorangegangenen Ansprüche, **dadurch gekennzeichnet, dass** der reaktive Schmelzklebstoff in einer Schichtdicke von etwa 0,04 bis etwa 0,20 mm, vorzugsweise von etwa 0,08 bis etwa 0,13 mm, und insbesondere von etwa 0,08 bis etwa 0,10 mm, aufgetragen ist.

16. Flächiges Verbundmaterial nach einem der vorangegangenen Ansprüche, **dadurch gekennzeichnet, dass** der reaktive Schmelzklebstoff einseitig in einer Auftragsmenge von etwa 40 bis etwa 200 g/m², vorzugsweise von etwa 60 bis etwa 130 g/m², und insbesondere von etwa 80 bis etwa 100 g/m² aufgetragen ist.

17. Flächiges Verbundmaterial nach einem der vorangegangenen Ansprüche, **dadurch gekennzeichnet, dass** das Verbundmaterial hinsichtlich der maximalen zulässigen Verformung den Anforderungen der Klasse 2 (c) gemäß DIN EN 12219 (Juni 2000) genügt.

18. Flächiges Verbundmaterial nach einem der vorangegangenen Ansprüche, **dadurch gekennzeichnet, dass** das Verbundmaterial hinsichtlich der maximalen zulässigen Verformung den Anforderungen der Klassen 2 (c) und 3 (d) gemäß DIN EN 12219 (Juni 2000) genügt.

19. Flächiges Verbundmaterial nach einem der vorangegangenen Ansprüche, **dadurch gekennzeichnet, dass** das Verbundmaterial hinsichtlich der maximalen zulässigen Verformung den Anforderungen der Klassen 2 (c), 3 (d) und 2 (e) gemäß DIN EN 12219 (Juni 2000) genügt.

## Claims

1. Sheet-like composite material having a core and at least one outer layer adhesively bonded to each flat side of the core and a vapour barrier between at least one flat side of the core and the outer layer, **characterized in that** the vapour barrier provided is the reactive hotmelt adhesive which serves for adhesive bonding and is applied in a defined layer thickness, and **in that** the outer layer is a wood layer.

2. Sheet-like composite material according to Claim 1, **characterized in that** a vapour barrier is provided between each flat side of the core and each outer layer, and **in that** the vapour barriers provided are the reactive hotmelt adhesive which serves for adhesive bonding and is applied in a defined layer thickness, and **in that** the outer layers are wood layers.

3. Sheet-like composite material according to either of the preceding Claims, **characterized in that** the sheet-like composite material is in the form of a door, preferably in the form of an air-conditioning door, and in particular in the form of a house or a dwelling entrance door.

4. Sheet-like composite material according to any of the preceding Claims, **characterized in that** the sheet-like composite material is in the form of a floor panel.

5. Sheet-like composite material according to any of the preceding Claims, **characterized in that** the core is in the form of a door frame.

6. Sheet-like composite material according to Claim 5, **characterized in that** insulation is provided in the door frame.

7. Sheet-like composite material according to Claim 6, **characterized in that** the insulation is an insulating polyurethane core.

8. Sheet-like composite material according to any of the preceding Claims, **characterized in that** the wood layer(s) is a layer of plywood, a thin chipboard, an MDF board, an HDF board, a solid wood layer, a hard fibre board, a layer of spruce, larch or oak wood, a thin solid wood board and/or a wood-base board, and in particular a layer of plywood, an MDF board or an HDF board.

9. Sheet-like composite material according to any of the preceding Claims, **characterized in that** the thickness of the wood layer(s) is about 0.5 to about 16 mm, preferably about 2 to about 12 and in particular about 3 to about 9 mm.

10. Sheet-like composite material according to any of the preceding Claims, **characterized in that that** flat side of each wood layer which faces away from the core is adhesively bonded to at least one further layer and at least one vapour barrier in between, the vapour barrier provided being the reactive hotmelt adhesive which serves for adhesive bonding and is applied in a defined layer thickness.

11. Sheet-like composite material according to any of the preceding Claims, **characterized in that** the further layer(s) is a wood layer, preferably a solid wood layer, a plywood layer, an MDF layer, an HDF layer, an OSB layer or an HPL layer, and in particular a solid wood layer.

12. Sheet-like composite material according to any of the preceding Claims, **characterized in that** the thickness of the further layer(s) is about 0.5 to about 10 mm, preferably about 2 to about 10 mm and in particular about 3 to about 8 mm.

13. Sheet-like composite material according to Claim 12, **characterized in that** the reactive hotmelt adhesive is a reactive polyurethane hotmelt adhesive.

14. Sheet-like composite material according to Claim 13, **characterized in that** the reactive polyurethane hotmelt adhesive is a moisture-crosslinking reactive polyurethane hotmelt adhesive, in particular a moisture-crosslinking, reactive one-component polyurethane hotmelt adhesive.

15. Sheet-like composite material according to any of the preceding Claims, **characterized in that** the reactive hotmelt adhesive is applied in a layer thickness of about 0.04 to about 0.20 mm, preferably of about 0.08 to about 0.13 mm and in particular of about 0.08 to about 0.10 mm.

16. Sheet-like composite material according to any of the preceding Claims, **characterized in that** the reactive hotmelt adhesive is applied on one side in an amount of about 40 to about 200 g/m², preferably of about 60 to about 130 g/m² and in particular of about 80 to about 100 g/m².

17. Sheet-like composite material according to any of the preceding Claims, **characterized in that** the composite material meets the requirements of class 2(c) according to DIN EN 12219 (June 2000) with regard to the maximum permissible deformation.

18. Sheet-like composite material according to any of the preceding Claims, **characterized in that** the composite material meets the requirements of classes 2(c) and 3(d) according to DIN EN 12219 (June 2000) with regard to the maximum permissible deformation.

19. Sheet-like composite material according to any of the preceding Claims, **characterized in that** the composite material meets the requirements of classes 2(c), 3(d) and 2(e) according to DIN EN 12219 (June 2000) with regard to the maximum permissible deformation.

## Revendications

1. Matériau composite plat, comportant un noyau et au moins une couche de finition collée sur chaque face plate du noyau, ainsi qu'un écran pare-vapeur entre au moins une face plate du noyau et la couche de finition, **caractérisé en ce que** la colle fusible réactive servant au collage, qui est appliquée en une épaisseur de couche définie, est prévue en tant qu'écran pare-vapeur, et **en ce que** la couche de finition est une couche en bois.

2. Matériau composite plat selon la revendication 1, **caractérisé en ce qu'**un écran pare-vapeur est prévu entre chaque face plate du noyau et chaque couche de finition, **en ce que** la colle fusible réactive servant au collage, qui est appliquée en une épaisseur de couche définie, est prévue en tant qu'écrans pare-vapeur, et **en ce que** les couches de finition sont des couches en bois.

3. Matériau composite plat selon l'une des revendications précédentes, **caractérisé en ce que** le matériau composite plat est agencé sous la forme d'une porte, de préférence d'une porte de climatisation, et notamment d'une porte d'entrée d'immeuble ou d'appartement.

4. Matériau composite plat selon l'une des revendications précédentes, **caractérisé en ce que** le matériau composite plat est agencé sous la forme d'un panneau de plancher.

5. Matériau composite plat selon l'une des revendications précédentes, **caractérisé en ce que** le noyau est agencé sous la forme d'un encadrement de porte.

6. Matériau composite plat selon la revendication 5, **caractérisé en ce qu'**une protection d'isolation est prévue dans l'encadrement de porte.

7. Matériau composite plat selon la revendication 6, **caractérisé en ce que** la protection d'isolation est un noyau isolant en polyuréthane.

8. Matériau composite plat selon l'une des revendications précédentes, **caractérisé en ce que** la (les) couche(s) en bois est (sont) une couche de contreplaqué, un mince panneau d'aggloméré, un panneau de MDF (ou bois à fibre de moyenne densité), un panneau de HDF (ou bois à fibre de toute densité), une couche en bois massif, un panneau de fibres dures, une couche en bois d'épicéa, de mélèze ou de chêne, un mince panneau en bois massif et/ou un panneau en matériau dérivé du bois, et notamment une couche de contreplaqué, un panneau de MDF ou de HDF.

9. Matériau composite plat selon l'une des revendications précédentes, **caractérisé en ce que** l'épaisseur de la (des) couche(s) en bois est de l'ordre de 0,5 à 16 mm environ, de préférence de l'ordre de 2 à 12 mm environ, et notamment de l'ordre de 3 à 9 mm environ.

10. Matériau composite plat selon l'une des revendications précédentes, **caractérisé en ce que** la face plate opposée au noyau de chaque couche en bois est collée à au moins une autre couche, ainsi qu'à au moins un écran pare-vapeur situé entre, la colle fusible réactive servant au collage, qui est appliquée en une épaisseur de couche définie, étant prévue en tant qu'écran pare-vapeur.

11. Matériau composite plat selon l'une des revendications précédentes, **caractérisé en ce que** la (les) autre(s) couche(s) est (sont) une couche en bois, de préférence une couche en bois massif, une couche de contreplaqué, une couche de MDF, une couche de HDF, une couche de OSB (ou panneau à lamelles ou copeaux orientés) ou une couche de HPL (ou laminé haute pression), et notamment une couche en bois massif.

12. Matériau composite plat selon l'une des revendications précédentes, **caractérisé en ce que** l'épaisseur de la (des) autre(s) couche(s) est de l'ordre de 0,5 à 10 mm environ, de préférence de l'ordre de 2 à 10 mm environ, et notamment de l'ordre de 3 à 8 mm environ.

13. Matériau composite plat selon la revendication 12, **caractérisé en ce que** la colle fusible réactive est une colle fusible réactive à base de polyuréthanne.

14. Matériau composite plat selon la revendication 13, **caractérisé en ce que** la colle fusible réactive à base de polyuréthanne est une colle fusible réactive à base de polyuréthanne se réticulant à l'humidité, notamment une colle fusible réactive à base de polyuréthanne 1K se réticulant à l'humidité.

15. Matériau composite plat selon l'une des revendications précédentes, **caractérisé en ce que** la colle fusible réactive est appliquée en une épaisseur de couche de l'ordre de 0,04 à 0,20 mm environ, de préférence de l'ordre de 0,08 à 0,13 mm environ, et notamment de l'ordre de 0,08 à 0,10 mm environ.

16. Matériau composite plat selon l'une des revendications précédentes, **caractérisé en ce que** la colle fusible réactive est appliquée sur une face à raison d'une quantité d'application de l'ordre de 40 à 200 g/m² environ, de préférence de l'ordre de 60 à 130 g/m² environ, et notamment de l'ordre de 80 à 100 g/m² environ.

17. Matériau composite plat selon l'une des revendications précédentes, **caractérisé en ce que**, du point de vue de sa déformation maximale admissible, le matériau composite satisfait aux exigences de la classe 2 (c) selon la DIN EN 12219 (juin 2000).

18. Matériau composite plat selon l'une des revendications précédentes, **caractérisé en ce que**, du point de vue de sa déformation maximale admissible, le matériau composite satisfait aux exigences des classes 2 (c) et 3 (d) selon la DIN EN 12219 (juin 2000).

19. Matériau composite plat selon l'une des revendications précédentes, **caractérisé en ce que**, du point de vue de sa déformation maximale admissible, le matériau composite satisfait aux exigences des classes 2 (c), 3 (d) et 2 (e) selon la DIN EN 12219 (juin 2000).
